# EUROPEAN PATENT SPECIFICATION

(11) **EP 2 925 034 B1**
(45) Date of publication and mention of the grant of the patent: **31.07.2019**
(21) Application number: 12888693.4
(22) Date of filing: 22.11.2012
(51) Int. Cl.: H04W 12/06, H04W 48/02, H04L 12/24, H04L 29/06, H04W 84/04

(54) **NETWORK ELEMENT ACCESS METHOD AND DEVICE**
ZUGRIFFSVERFAHREN UND VORRICHTUNG FÜR NETZWERKELEMENT
PROCÉDÉ ET DISPOSITIF D'ACCÈS PAR UN ÉLÉMENT DE RÉSEAU

(43) Date of publication of application: 30.09.2015
(73) Proprietor: Huawei Technologies Co., Ltd., Longgang District Shenzhen, Guangdong 518129 (CN)
(72) Inventor: ZOU, Chang, Shenzhen Guangdong 518129 (CN)
(74) Representative: Isarpatent
(86) International application number: PCT/CN2012/085053
(87) International publication number: WO 2014/079016

(56) References cited:
- EP-A1- 2 136 508
- WO-A1-2011/162651
- WO-A2-2010/123322
- CN-A- 101 047 587
- CN-A- 101 141 784
- CN-A- 102 547 707
- CN-A- 102 685 748
- US-A1- 2011 314 522
- US-B1- 7 502 929

## Description

### TECHNICAL FIELD

The present application relates to the field of network technologies, and in particular, to a network element access method, a system, and a device.

### BACKGROUND

In the field of large-scale network devices, a network includes a wireless network function element (network element for short) responsible for actual service functions and a network management element (network management element for short) managing the network element. A process in which a network element accesses a network by means of authentication that is performed by a network management element is referred to as network element access.

The prior art provides a network element access method, where a network is accessed by using an Internet Protocol (IP, Internet Protocol) address that is obtained by using the Dynamic Host Configuration Protocol (DHCP, Dynamic Host Configuration Protocol). However, in a long-term research process, because DHCP is easily attacked by a hacker, this network element access method has a security threat. To prevent this type of security threat, DHCP functions are disabled on some networks, and consequently, a network element cannot access the networks.

The prior art further provides a network element access method, where information required for network element access is manually configured directly in a network element. However, this method features a high requirement for a person skilled in the art and high costs, and is error-prone.

EP 2136508 A1 discloses a method, a system and an equipment for network access. The method includes: by an access authenticator, receiving a Discover message sent by a client, returning a response message, and obtaining first configuration information used by the client during authentication, where the Discover message is used to discover the access authenticator; authenticating the client or interacting with an authentication server (AS) to authenticate the client remotely as an agent of the client; and sending a configuration request message to a configuration server to request second configuration information used by the client during a session after the authentication succeeds. A network access system, an access authentication apparatus and a broadband access device are also disclosed. The present invention can assure the stability of authentication.

US 7502929 B1 discloses a method and an apparatus for assigning network addresses based on connection authentication. One approach involves receiving first data at the intermediate device from an authentication and authorization server in response to a request for authentication for the connection. The first data indicates at least some of authentication and authorization information. A configuration request message from the host is also received at the intermediate device. A second message is generated based on the configuration request message and the first data and is sent to a configuration server that provides the logical network address for the host. The configuration server provides the logical network address based on authorization and authentication information. The logical network address is thus based on the user, e.g., to limit access by the user to the Internet and other services.

US 2011/0314522 A1 relates to relay node management and authorization. A relay node can initially be wirelessly authenticated to a network entity using initial security credentials. In response to a successful authentication, the relay node is authorized to wirelessly communicate with the communication network for a limited purpose of configuring the relay node for relay device operations. The relay node can receive new security credentials from the communication network, and is subsequently re-authenticated to the network entity using the new security credentials. In response to a successful re-authentication, the relay node is authorized by the network to operate as a relay device for conveying traffic between one or more access terminals and the communication network.

### SUMMARY

To solve at least some of the foregoing security problems when accessing a network, the present invention provides a network element access method and a network element as defined in the attached independent claims. Further advantageous embodiments and improvements of the invention are listed in the dependent claims.

A network element that has accessed a network sends, to a network management element, an access data request of a network element attempting to access the network, and then the network management element sends, via the network element that has accessed the network, an access data response to the network element attempting to access the network, so as to allow or forbid the network element attempting to access the network to access the network. Because a secure link has established between the network element that has accessed the network and the network management element, the network element that has accessed the network and that has relatively high security performance can be used, so as to prevent an attack and improve security performance. In addition, automatic access can be implemented by using the link between the network element that has accessed the network and the network management element, which decreases requirements for a person skilled in the art, reduces costs, and prevents errors.

### BRIEF DESCRIPTION OF DRAWINGS

FIG. 1 is a schematic structural diagram of an implementation manner of a network system according to the present application;
FIG. 2 is a flowchart of a first possible implementation manner of a network element access method according to the present application;
FIG. 3 is a flowchart of a second possible implementation manner of the network element access method according to the present application;
FIG. 4 is a flowchart of a third possible implementation manner of the network element access method according to the present application;
FIG. 5 is a flowchart of a fourth possible implementation manner of the network element access method according to the present application;
FIG. 6 is a flowchart of a fifth possible implementation manner of the network element access method according to the present application;
FIG. 7 is a flowchart of a sixth possible implementation manner of the network element access method according to the present application;
FIG. 8 is a schematic structural diagram of a first possible implementation manner of a network element according to the present application;
FIG. 9 is a schematic structural diagram of a second possible implementation manner of the network element according to the present application;
FIG. 10 is a schematic structural diagram of a third possible implementation manner of the network element according to the present application;
FIG. 11 is a schematic structural diagram of a fourth possible implementation manner of the network element according to the present application;
FIG. 12 is a schematic structural diagram of a first possible implementation manner of a network management element according to the present application;
FIG. 13 is a schematic structural diagram of a second possible implementation manner of the network management element according to the present application;
FIG. 14 is a schematic structural diagram of a fifth possible implementation manner of the network element according to the present application;
FIG. 15 is a schematic structural diagram of a sixth possible implementation manner of the network element according to the present application; and
FIG. 16 is a schematic structural diagram of a third possible implementation manner of the network management element according to the present application.

### DESCRIPTION OF EMBODIMENTS

In the following description, to illustrate rather than limit, specific details such as a particular system structure, an interface, and a technology are provided to make a thorough understanding of the present application. However, a person skilled in the art should know that the present application may be practiced in other implementation manners without these specific details. In other cases, detailed descriptions of well-known apparatuses, circuits, and methods are omitted, so that the present application is described without being obscured by unnecessary details.

The following provides descriptions with reference to the accompanying drawings and specific implementation manners. In the present application, a network mainly refers to a radio access network.

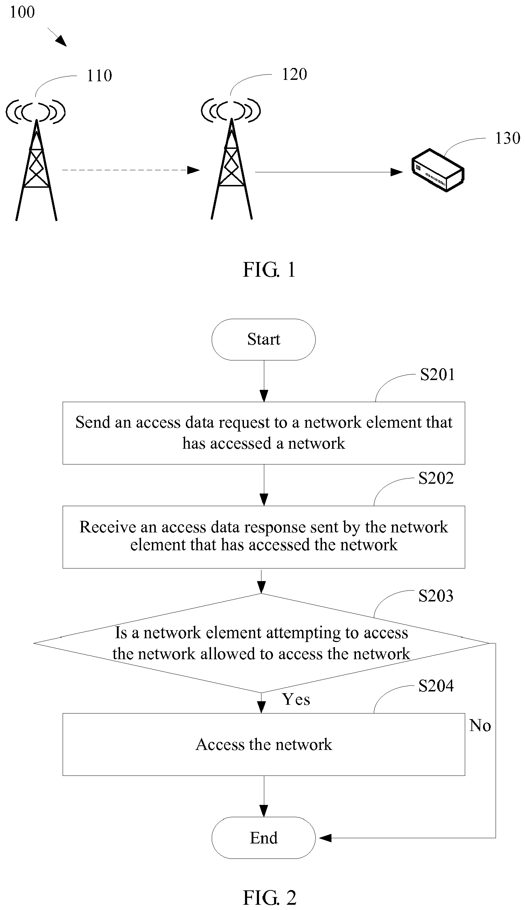

Referring to FIG. 1, FIG. 1 is a schematic structural diagram of an implementation manner of a network system according to the present application. A network system 100 in this implementation manner includes at least one network element 110 attempting to access a network, a network element 120 that has accessed the network, and a network management element 130. The network element 110 attempting to access the network is coupled with the network element 120 that has accessed the network, and the network element 120 that has accessed the network is coupled with the network management element 130.

The network element 110 attempting to access the network is a communications device with a communication function, can be used as a data forwarding medium of upper-level and lower-level devices, and is generally disposed close to a user side. The network element 110 attempting to access the network is generally a communications device without link data (such as a new communications device) or a communications device with invalid link data, and therefore the network is not accessed by the network element 110 attempting to access the network and the network element 110 attempting to access the network cannot perform data transmission by using a network resource.

The network element 120 that has accessed the network, like the network element 110 attempting to access the network, is also a communications device, but the network element 120 that has accessed the network has valid link data, and can access the network and perform data transmission by using a network resource. For example, a base station serves as the network element 120 that has accessed the network, and the base station can forward data of a terminal (not shown in the figure) to an access controller (not shown in the figure) and may also forward data of the access controller to the terminal.

The network management element 130 is a management element that can perform authentication on the network element 110 attempting to access the network, and is generally disposed in a central office. Only after being authenticated by the network management element 130, the network element 110 attempting to access the network can access the network, and perform data transmission by using a network resource. The network management element 130 may be an entity with a network management function, for example, a network management element system, or a network management element device.

Referring to FIG. 2, FIG. 2 is a flowchart of a first possible implementation manner of a network element access method according to the present application. The network element access method in this implementation manner includes the following steps:
S201: A network element attempting to access a network sends an access data request to a network element that has accessed the network, so that the network element that has accessed the network forwards the access data request to a network management element.
S202: The network element attempting to access the network receives an access data response sent by the network element that has accessed the network. The access data response is generated by the network management element by performing authentication after the network management element receives the access data request forwarded by the network element that has accessed the network, and the access data response is sent, to the network element attempting to access the network, by the network management element via the network element that has accessed the network. The access data response includes access data, and the network element attempting to access the network accesses the network according to the access data.
S203: The network element attempting to access the network determines, according to the access data response, whether the network element attempting to access the network is allowed to access the network. If the access data response indicates that the network element attempting to access the network is allowed to access the network, go to S204; if the access data response indicates that the network element is not allowed to access the network, end the procedure.
S204: The network element attempting to access the network accesses the network. The network element attempting to access the network reads the access data from the access data response and accesses the network according to the access data. Preferably, the access data includes an IP address of the network management element and an authentication certificate. After obtaining the IP address of a gateway and the authentication certificate, the network element attempting to access the network establishes a link with the network management element according to the IP address of the network management element. After establishing the link, the network element attempting to access the network sends the authentication certificate to the gateway. After receiving the authentication certificate, the network management element performs authentication on the authentication certificate; when the authentication is successful, the network element attempting to access the network is allowed to access the network management element and then accesses the network. Finally, the procedure ends.

In the foregoing solution, access authentication can be performed by using a network element that has accessed a network and has relatively high security performance, so as to prevent an attack and improve security performance. In addition, automatic access is implemented by using a link between the network element that has accessed the network and a network management element, which decreases requirements for a person skilled in the art, reduces costs, and prevents errors.

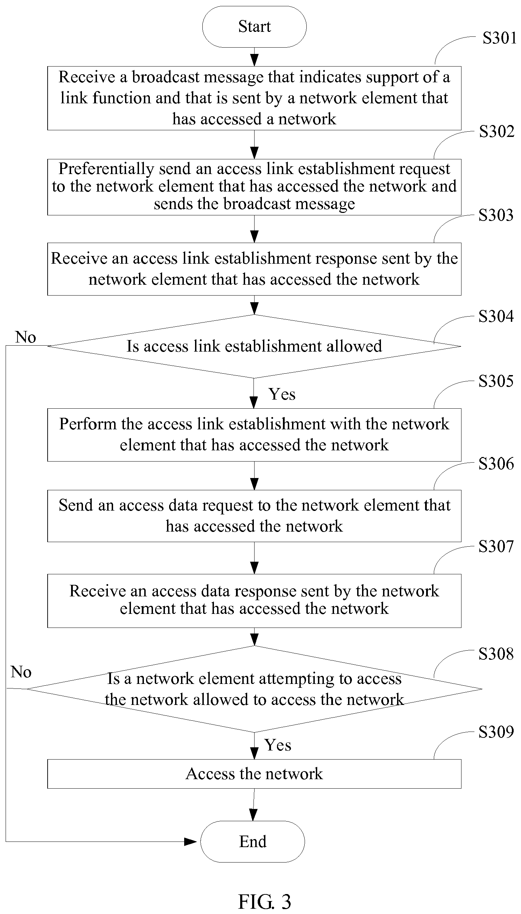

Referring to FIG. 3, FIG. 3 is a flowchart of a second possible implementation manner of the network element access method according to the present application. The network element access method in this implementation manner includes the following steps:
S301: A network element attempting to access a network receives a broadcast message that indicates support of a link function and is sent by a network element that has accessed the network.

The network element attempting to access the network receives, within a reception range of the network element attempting to access the network, the broadcast message sent by the network element that has accessed the network; after receiving the broadcast message sent by the network element that has accessed the network, the network element attempting to access the network may know that the network element that has accessed the network and sends the broadcast message supports the link function for linking with the network element attempting to access the network. It can be understood that the network element attempting to access the network may receive, within the reception range of the network element attempting to access the network, broadcast messages sent by all network elements that have accessed the network, and select one network element that has accessed the network to establish a link, or determine priority levels according to indexes, such as signal strength and a capacity, of all the network elements that have accessed the network and send the broadcast messages.

S302: The network element attempting to access the network preferentially sends an access link establishment request to the network element that has accessed the network and sends the broadcast message. Access link establishment refers to that the network element attempting to access the network establishes a data transmission relationship with the network element that has accessed the network.

After receiving the broadcast message sent by the network element that has accessed the network, the network element attempting to access the network preferentially sends the access link establishment request to the network element that has accessed the network and sends the broadcast message. If multiple network elements that have accessed the network send broadcast messages to the network element attempting to access the network, a network element that has accessed the network is selected according to priority levels of these network elements that have accessed the network, and the access link establishment request is sent to the network element that has accessed the network.

S303: The network element attempting to access the network receives an access link establishment response sent by the network element that has accessed the network.

After receiving the access link establishment request, the network element that has accessed the network may send the access link establishment request to a network management element. The network management element determines, according to the access link establishment request, whether the network element attempting to access the network is allowed to perform access link establishment with the network element that has accessed the network, adds a result in the access link establishment response, and sends the access link establishment response to the network element that has accessed the network. The network element that has accessed the network forwards the access link establishment response to the network element attempting to access the network, and the network element attempting to access the network correspondingly receives the access link establishment response sent by the network element that has accessed the network.

In another implementation manner, a link switch function may further be configured in the network element that has accessed the network, it is determined, according to a status of the link switch function, whether the network element attempting to access the network is allowed to perform access link establishment with the network element that has accessed the network, a result is carried in the access link establishment response and sent to the network element attempting to access the network, and the network element attempting to access the network correspondingly receives the access link establishment response sent by the network element that has accessed the network.

S304: The network element attempting to access the network determines whether access link establishment is allowed.

After receiving the access link establishment response, the network element attempting to access the network determines, according to the access link establishment response, whether the access link establishment is allowed. If the network management element allows the network element attempting to access the network to perform the access link establishment with the network element that has accessed the network, or the link switch function is enabled, that is, a determining result is that the network element attempting to access the network is allowed to perform the access link establishment with the network element that has accessed the network, go to S305; if the network management element does not allow the network element attempting to access the network to perform the access link establishment with the network element that has accessed the network, or the link switch function is disabled, that is, a determining result is that the network element attempting to access the network is not allowed to perform the access link establishment with the network element that has accessed the network, end the procedure.

S305: The network element attempting to access the network performs the access link establishment with the network element that has accessed the network.

When the determining result is that the network element attempting to access the network is allowed to perform the access link establishment with the network element that has accessed the network, the network element attempting to access the network performs the access link establishment with the network element that has accessed the network. After the access link establishment, the network element attempting to access the network may perform data communication with the network element that has accessed the network.

Steps S306-S309 are the same as steps S201-S204 in the foregoing embodiment and are not described repeatedly herein.

A network element attempting to access a network can perform confirmation when performing access link establishment. The network element attempting to access the network performs the access link establishment with the network element that has accessed the network only when it is confirmed that the access link establishment is allowed, thereby improving security. In addition, the network element attempting to access the network may preferentially send, according to a broadcast message, an access link establishment request to the network element that has accessed the network and sends the broadcast message, so as to increase efficiency of the access link establishment.

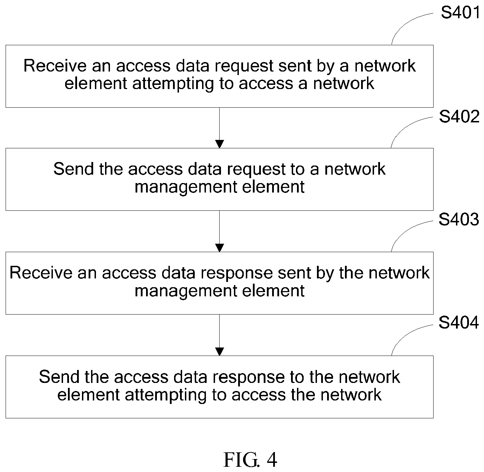

Referring to FIG. 4, FIG. 4 is a flowchart of a third possible implementation manner of the network element access method according to the present application. The network element access method in this implementation manner includes the following steps:
S401: A network element that has accessed a network receives an access data request sent by a network element attempting to access the network.

The network element attempting to access the network sends the access data request to the network element that has accessed the network, and the network element that has accessed the network correspondingly receives the access data request sent by the network element attempting to access the network.

S402: The network element that has accessed the network sends the access data request to a network management element.

After receiving the access data request, the network element that has accessed the network sends the access data request to the network management element. After receiving the access data request, the network management element performs authentication according to the access data request and generates an access data response. The access data response includes access data, and the network element attempting to access the network accesses the network according to the access data.

S403: The network element that has accessed the network receives an access data response sent by the network management element.

After generating the access data response by performing the authentication, the network management element sends the access data response to the network element that has accessed the network. The network element that has accessed the network correspondingly receives the access data response sent by the network management element.

S404: The network element that has accessed the network sends the access data response to the network element attempting to access the network.

After receiving the access data response, the network element that has accessed the network sends the access data response to the network element attempting to access the network, so that the network element attempting to access the network accesses the network according to the access data response.

In the foregoing solution, access authentication can be performed by using a network element that has accessed a network and has relatively high security performance, so as to prevent an attack and improve security performance. In addition, automatic access is implemented by using a link between the network element that has accessed the network and a network management element, which decreases requirements for a person skilled in the art, reduces costs, and prevents errors.

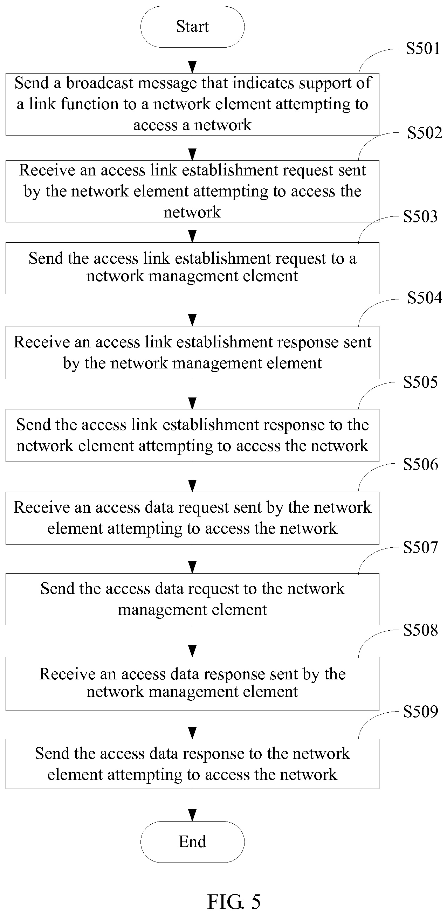

Referring to FIG. 5, FIG. 5 is a flowchart of an implementation manner of the network element access method according to the present invention. A difference from the implementation manner shown in FIG. 4 lies in that an authentication process for an access link establishment request is included, and the method includes the following steps:
S501: A network element that has accessed a network sends a broadcast message that indicates support of a link function to a network element attempting to access the network.

The network element that has accessed the network sends, within a cell of the network element that has accessed the network, the broadcast message that indicates support of a link function. After receiving the broadcast message sent by the network element that has accessed the network, the network element attempting to access the network may know that the network element that has accessed the network supports the link function, and the network element attempting to access the network preferentially sends an access link establishment request to the network element that has accessed the network.

S502: Receive an access link establishment request sent by the network element attempting to access the network.

The network element attempting to access the network sends the access link establishment request to the network element that has accessed the network, and the network element that has accessed the network correspondingly receives the access link establishment request sent by the network element attempting to access the network. Access link establishment refers to that the network element attempting to access the network establishes a data transmission relationship with the network element that has accessed the network.

S503: The network element that has accessed the network sends the access link establishment request to a network management element.

After receiving the access link establishment request, the network element that has accessed the network forwards the access link establishment request to the network management element. The network management element determines, according to the access link establishment request, whether the network element attempting to access the network is allowed to perform access link establishment with the network element that has accessed the network, and adds a result in an access link establishment response.

S504: The network element that has accessed the network receives an access link establishment response sent by the network management element.

The network management element sends the access link establishment response to the network element that has accessed the network, and the network element that has accessed the network correspondingly receives the access link establishment response sent by the network management element.

S505: The network element that has accessed the network sends the access link establishment response to the network element attempting to access the network.

After receiving the access link establishment response sent by the network management element, the network element that has accessed the network forwards the access link establishment response to the network element attempting to access the network, so that the network element attempting to access the network is allowed to perform the access link establishment with the network element that has accessed the network.

Steps S506-S509 are all the same as steps S401-S404 in the foregoing implementation manner and are not described repeatedly herein.

In another implementation manner, the network element that has accessed the network may receive link switch configuration information sent by the network management element and an access link establishment request. If the link switch configuration information is "enabled" , the network element attempting to access the network is allowed to perform access link establishment with the network element that has accessed the network according to the access link establishment request; if the link switch configuration information is "disabled", the network element attempting to access the network is forbidden to perform access link establishment with the network element that has accessed the network.

Whether a network element attempting to access a network is allowed to perform access link establishment with a network element that has accessed the network is configured by a network management element or is configured in the network element that has accessed the network. The network element attempting to access the network performs the access link establishment with the network element that has accessed the network only when it is confirmed that the access link establishment is allowed, thereby improving security. In addition, the network element attempting to access the network may preferentially send, according to a broadcast message, an access link establishment request to the network element that has accessed the network and sends the broadcast message, so as to increase efficiency of the access link establishment.

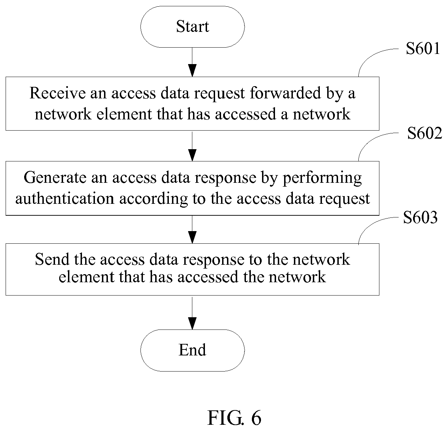

Referring to FIG. 6, FIG. 6 is a flowchart of a fifth possible implementation manner of the network element access method according to the present application. The network element access method in this implementation manner includes the following steps:
S601: A network management element receives an access data request forwarded by a network element that has accessed a network.
S602: The network management element generates an access data response by performing authentication according to the access data request.

After receiving the access data request, the network management element generates the access data response by performing the authentication. The access data response carries a result indicating whether a network element attempting to access the network is allowed to access the network. In addition, access data is carried in the access data response.

S603: The network management element sends the access data response to the network element that has accessed the network.

After generating the access data response, the network management element sends the access data response to the network element that has accessed the network. After receiving the access data response, the network element that has accessed the network forwards the access data response to the network element attempting to access the network, and the network element attempting to access the network determines, according to the access data response, whether to access the network.

In the foregoing solution, access authentication can be performed by using a network element that has accessed a network and has relatively high security performance, so as to prevent an attack and improve security performance. In addition, automatic access is implemented by using a link between the network element that has accessed the network and a network management element, which decreases requirements for a person skilled in the art, reduces costs, and prevents errors.

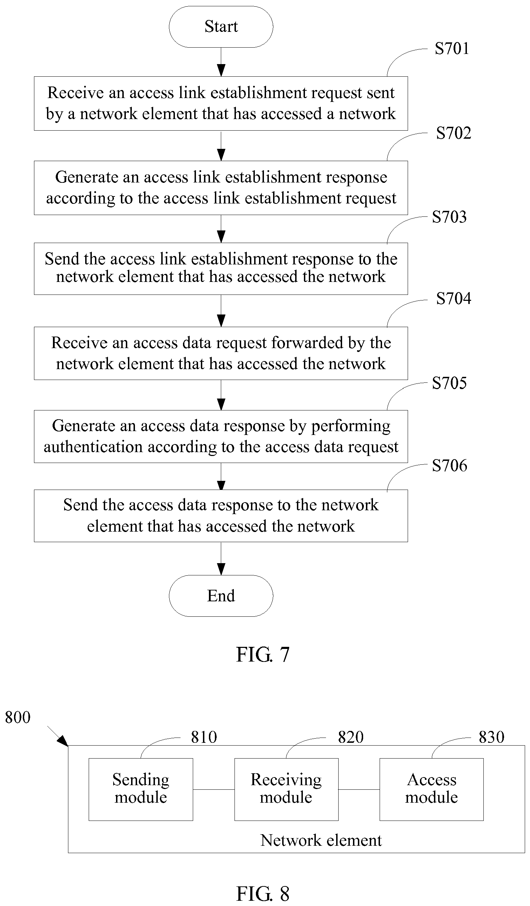

Referring to FIG. 7, FIG. 7 is a flowchart of a sixth possible implementation manner of the network element access method according to the present application. The network element access method in this implementation manner includes the following steps:
S701: A network management element receives an access link establishment request sent by a network element that has accessed a network.

To determine whether a network element attempting to access the network is allowed to perform access link establishment with the network element that has accessed the network, the network element attempting to access the network needs to first send an access link establishment request to the network element that has accessed the network. Access link establishment refers to that the network element attempting to access the network establishes a data transmission relationship with the network element that has accessed the network. After receiving the access link establishment request, the network element that has accessed the network sends the access link establishment request to the network management element, and the network management element correspondingly receives the access link establishment request sent by the network element that has accessed the network.

S702: The network management element generates an access link establishment response according to the access link establishment request.

After receiving the access link establishment request, the network management element performs authentication according to the access link establishment request and generates the access link establishment response.

S703: The network management element sends the access link establishment response to the network element that has accessed the network.

After generating the access link establishment response, the network management element sends the access link establishment response to the network element that has accessed the network, so as to allow or forbid the network element attempting to access the network to perform the access link establishment with an access network element.

Steps S704-S706 are all the same as steps S601-S603 in the foregoing implementation manner and are not described repeatedly herein.

In other implementation manners, when the network element attempting to access the network needs to perform access link establishment with the network element that has accessed the network, configuration information indicating that a link function is enabled may be sent to the network element that has accessed the network. For example, network elements attempting to access the network concurrently access the network at a specific moment, the network management element sends, at an appointed moment, the configuration information indicating that a link function is enabled to the network element that has accessed the network; or when each network element attempting to access the network separately accesses the network, a message is sent manually to the network management element, and the network management element sends, after receiving the message, the configuration information indicating that a link function is enabled to the network element that has accessed the network.

To ensure security, after the network element attempting to access the network receives an access data response, configuration information indicating that the link function is disabled is sent to the network element that has accessed the network, so as to prevent access of an invalid user. For example, when the network element attempting to access the network accesses the network at a specific moment, if it is estimated that access requires about one hour, the network management element may send, after the link switch configuration information is enabled for one hour, the configuration information indicating that the link function is disabled to the network element that has accessed the network; or when the network element attempting to access the network accesses the network, a message is sent manually to the network management element, and the network management element sends, after receiving the message, the configuration information indicating that the link function is disabled to the network element that has accessed the network.

Whether a network element attempting to access a network is allowed to perform access link establishment with a network element that has accessed the network is configured by a network management element or is configured in the network element that has accessed the network. The network element attempting to access the network performs the access link establishment with the network element that has accessed the network only when it is confirmed that the access link establishment is allowed, thereby improving security.

Referring to FIG. 8, FIG. 8 is a schematic structural diagram of a first possible implementation manner of a network element according to the present application. A network element 800 in this implementation manner attempts to access a network and includes a sending module 810, a receiving module 820, and an access module 830 that are connected sequentially.

The sending module 810 is configured to send an access data request to a network element that has accessed the network, so that the network element that has accessed the network forwards the access data request to a network management element.

The receiving module 820 is configured to receive an access data response sent by the network element that has accessed the network, where the access data response is generated by the network management element by performing authentication after the network management element receives the access data request forwarded by the network element that has accessed the network, and the access data response is sent, to the network element 800 attempting to access the network, by the network management element via the network element that has accessed the network. The access data response includes access data, and the network element 800 accesses the network according to the access data. For example, the access data includes an IP address of the network management element and an authentication certificate. After obtaining the IP address of a gateway and the authentication certificate, the network element 800 attempting to access the network establishes a link with the gateway according to the IP address of the gateway. After establishing the link, the network element 800 attempting to access the network sends the authentication certificate to the gateway. After receiving the authentication certificate, the gateway performs authentication on the authentication certificate; when the authentication is successful, the network element 800 attempting to access the network is allowed to access the gateway and then accesses the network. The receiving module 820 sends the access data response to the access module 830.

The access module 830 is configured to receive the access data response, and when the access data response indicates that the network element 800 is allowed to access the network, access the network.

In the foregoing solution, access authentication can be performed by using a network element that has accessed a network and has relatively high security performance, so as to prevent an attack and improve security performance. In addition, automatic access is implemented by using a link between the network element that has accessed the network and a network management element, which decreases requirements for a person skilled in the art, reduces costs, and prevents errors.

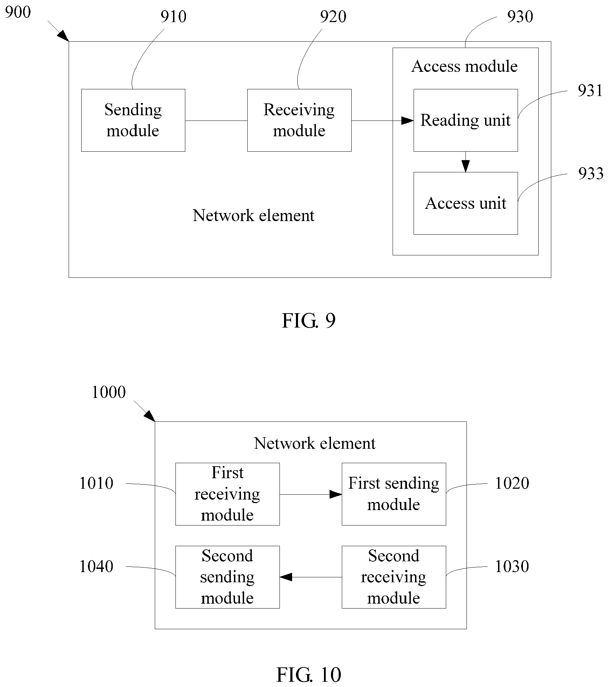

Referring to FIG. 9, FIG. 9 is a schematic structural diagram of a second possible implementation manner of the network element according to the present application. A network element 900 in this implementation manner attempts to access a network, and includes a sending module 910, a receiving module 920, and an access module 930. The access module 930 includes a reading unit 931 and an access unit 933.

The sending module 910 is configured to send an access link establishment request and an access data request to a network element that has accessed the network. Access link establishment refers to that the network element 900 establishes a data transmission relationship with the network element that has accessed the network. An access data response includes access data and the network element 900 accesses the network according to the access data. For example, the sending module 910 sends the access link establishment request and the access data request to the network element that has accessed the network, so as to pass authentication and enable the network element 900 to perform access link establishment with the network element that has accessed the network and access the network. When the access link establishment needs to be performed, the access link establishment request must be sent first. The access data request is sent only after authentication for the access link establishment is successful and the network element 900 is allowed to access the network.

The receiving module 920 is configured to receive an access link establishment response and the access data response, and send the access link establishment response and the access data response to the access module 930. For example, after the sending module 910 sends the access link establishment request, the network element that has accessed the network may send the access link establishment request to a network management element. The network management element determines, according to the access link establishment request, whether the network element 900 is allowed to perform the access link establishment with the network element that has accessed the network, adds a result in the access link establishment response, and sends the access link establishment response to the network element that has accessed the network. The network element that has accessed the network forwards the access link establishment response to the network element 900, and the network element 900 correspondingly receives the access link establishment response sent by the network element that has accessed the network. Alternatively, a link switch function is configured in the network element that has accessed the network, it is determined, according to a status of the link switch function, whether the network element 900 is allowed to perform the access link establishment with the network element that has accessed the network, a result is carried in the access link establishment response and sent to the network element 900, and the network element 900 correspondingly receives the access link establishment response sent by the network element that has accessed the network. After it is determined that the network element 900 is allowed to perform the access link establishment, the sending module 910 sends the access data request to the network element that has accessed the network, and the network element that has accessed the network sends the access data request to the network management element. The network management element performs authentication according to the access data request, generates the access data response, and sends the access data response to the network element that has accessed the network. The network element that has accessed the network forwards the received access data response to the network element 900, and the network element 900 correspondingly receives the access data response sent by the network element that has accessed the network.

The access module 930 includes the reading unit 931 and the access unit 933. The access module 930 is configured to receive the access data response, and when the access data response indicates that the network element 900 is allowed to access the network, access the network. Specifically, the reading unit 931 is configured to read the access data from the access data response and send the access data to the access unit 933.

The access unit 933 is configured to: receive the access link establishment response, and when the access link establishment response indicates that the access link establishment is allowed, perform the access link establishment with the network element that has accessed the network; and receive the access data, and access the network according to the access data.

For example, after the receiving module 920 receives the access link establishment response, and when the access link establishment response indicates that the access link establishment is allowed, the access unit 933 performs the access link establishment with the network element that has accessed the network. After the access link establishment is complete, if the access module 930 receives the access data response, the reading unit 931 reads the access data from the access data response and sends the access data to the access unit 933. After receiving the access data, the access unit 933 accesses the network according to the access data. The access data includes an IP address of the network management element and an authentication certificate. After obtaining the IP address of a gateway and the authentication certificate, the network element 900 attempting to access the network establishes a link with the gateway according to the IP address of the gateway. After establishing the link, the network element 900 attempting to access the network sends the authentication certificate to the gateway. After receiving the authentication certificate, the gateway performs authentication on the authentication certificate; when the authentication is successful, the network element 900 attempting to access the network is allowed to access the gateway and then accesses the network.

The receiving module 920 is further configured to receive a broadcast message that indicates support of a link function and that is sent by the network element that has accessed the network, and send the broadcast message to the access module 930. The access module 930 is configured to receive the broadcast message and preferentially send the access link establishment request to the network element that has accessed the network and sends the broadcast message. For example, the receiving module 920 receives, within a reception range of the receiving module 920, the broadcast message sent by the network element that has accessed the network; after receiving the broadcast message sent by the network element that has accessed the network, the receiving module 920 may know that the network element that has accessed the network and sends the broadcast message supports the link function for linking with the network element attempting to access the network. It can be understood that the receiving module 920 may receive, within the reception range of the receiving module 920, broadcast messages sent by all network elements that have accessed the network, and select one network element that has accessed the network to establish a link, or determine priority levels according to indexes, such as signal strength and a capacity, of all the network elements that have accessed the network and send the broadcast messages. After the receiving module 920 receives the broadcast message sent by the network element that has accessed the network, the access module 930 preferentially sends the access link establishment request to the network element that has accessed the network and sends the broadcast message. If multiple network elements that have accessed the network send broadcast messages to the network element attempting to access the network, a network element that has accessed the network is selected according to priority levels of these network elements that have accessed the network, and the access module 930 sends the access link establishment request to the network element that has accessed the network.

Whether a network element attempting to access a network is allowed to perform access link establishment with a network element that has accessed the network is configured by a network management element or is configured in the network element that has accessed the network. The network element attempting to access the network performs the access link establishment with the network element that has accessed the network only when it is confirmed that the access link establishment is allowed, thereby improving security. In addition, the network element attempting to access the network may preferentially send, according to a broadcast message, an access link establishment request to the network element that has accessed the network and sends the broadcast message, so as to increase efficiency of the access link establishment.

Referring to FIG. 10, FIG. 10 is a schematic structural diagram of a third possible implementation manner of the network element according to the present application. A network element 1000 in this implementation manner has accessed a network and includes a first receiving module 1010, a first sending module 1020, a second receiving module 1030, and a second sending module 1040. The first receiving module 1010 is coupled with the first sending module 1020, and the second receiving module 1030 is coupled with the second sending module 1040.

The first receiving module 1010 is configured to receive an access data request sent by a network element attempting to access the network, and send the access data request to the first sending module 1020. For example, the network element attempting to access the network sends the access data request to the network element that has accessed the network, and the first receiving module 1010 correspondingly receives the access data request sent by the network element attempting to access the network.

The first sending module 1020 is configured to receive the access data request and send the access data request to a network management element. For example, after receiving the access data request, the first receiving module 1010 sends the access data request to the first sending module 1020; after receiving the access data request, the first sending module 1020 sends the access data request to the network management element.

The second receiving module 1030 is configured to receive an access data response sent by the network management element, and send the access data response to the second sending module 1040. The access data response is generated by the network management element by performing authentication according to the access data request. For example, after receiving the access data request, the network management element performs the authentication according to the access data request and generates the access data response. The access data response includes access data, and the network element 1000 accesses the network according to the access data. After generating the access data response by performing the authentication, the network management element sends the access data response to the network element 1000, and the second receiving module 1030 correspondingly receives the access data response sent by the network management element.

The second sending module 1040 is configured to receive the access data response, and send the access data response to the network element attempting to access the network. For example, after receiving the access data response, the second sending module 1040 sends the access data response to the network element attempting to access the network, so that the network element attempting to access the network accesses the network according to the access data response.

The second sending module 1040 is further configured to send, when the network element 1000 supports a wireless link function, a broadcast message indicating support of a link function to the network element attempting to access the network. For example, the second sending module 1040 sends, within a cell of the network element 1000, the broadcast message indicating support of a link function; after receiving the broadcast message sent by the second sending module 1040, the network element attempting to access the network may know that the network element 1000 supports the link function, and the network element attempting to access the network preferentially sends an access link establishment request to the network element 1000.

In the foregoing solution, access authentication can be performed by using a network element that has accessed a network and has relatively high security performance, so as to prevent an attack and improve security performance. In addition, automatic access is implemented by using a link between the network element that has accessed the network and a network management element, which decreases requirements for a person skilled in the art, reduces costs, and prevents errors.

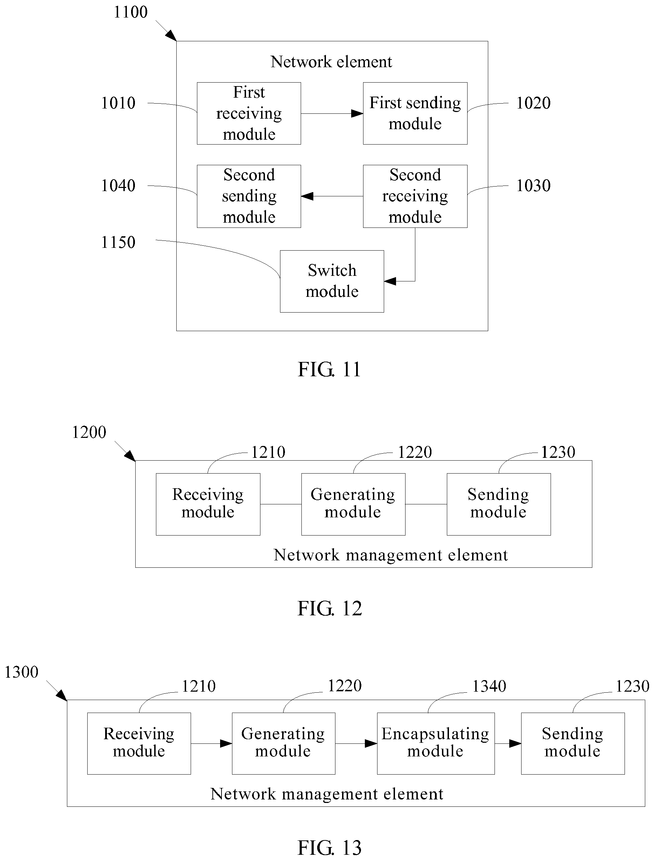

Referring to FIG. 11, FIG. 11 is a schematic structural diagram of an implementation manner of the network element according to the present invention. From a perspective of a structure, different from the network element in the foregoing implementation manner, a network element 1100 in this implementation manner further includes a switch module 1150, where the switch module 1150 is connected to a second receiving module 1030.

From a perspective of a function, a difference of the network element 1100 in this implementation manner lies in that:
a first receiving module 1010 is further configured to receive an access link establishment request sent by a network element attempting to access a network, and the first receiving module 1010 sends the access link establishment request to a first sending module 1020. For example, the network element attempting to access the network sends the access link establishment request to the network element 1100, and the first receiving module 1010 correspondingly receives the access link establishment request sent by the network element attempting to access the network. Access link establishment refers to that the network element attempting to access the network establishes a data transmission relationship with the first receiving module 1010.

The first sending module 1020 is further configured to receive the access link establishment request, and send the access link establishment request to a network management element. For example, after the first sending module 1020 receives the access link establishment request, the first sending module 1020 forwards the access link establishment request to the network management element. The network management element determines, according to the access link establishment request, whether the network element attempting to access the network is allowed to perform access link establishment with the network element 1100, and adds a result in an access link establishment response.

The second receiving module 1030 is further configured to receive the access link establishment response sent by the network management element, and send the access link establishment response to a second sending module 1040. For example, the network management element sends the access link establishment response to the network element 1100, and the second receiving module 1030 correspondingly receives the access link establishment response sent by the network management element.

The second sending module 1040 is further configured to receive the access link establishment response, and send the access link establishment response to the network element attempting to access the network, so as to allow or forbid the network element attempting to access the network to perform the access link establishment with the network element 1100. For example, after receiving the access link establishment response sent by the network management element, the second sending module 1040 forwards the access link establishment response to the network element attempting to access the network, so that the network element attempting to access the network is allowed to perform the access link establishment with the network element 1100.

The second receiving module 1030 is further configured to receive link switch configuration information sent by the network management element, and send the link switch configuration information to the switch module 1150.

The first receiving module 1010 is further configured to receive the access link establishment request sent by the network element attempting to access the network, and send the access link establishment request to the switch module 1150.

The switch module 1150 is configured to receive the switch configuration information and the access link establishment request. When the link switch configuration information is enabled, the network element attempting to access the network is allowed to perform the access link establishment with the network element 1100 according to the access link establishment request; when the link switch configuration information is disabled, the network element attempting to access the network is forbidden to perform the access link establishment with the network element 1100.

Whether a network element attempting to access a network is allowed to perform access link establishment with a network element that has accessed the network is configured by a network management element or is configured in the network element that has accessed the network. The network element attempting to access the network perform the access link establishment with the network element that has accessed the network only when it is confirmed that the access link establishment is allowed, thereby improving security. In addition, the network element attempting to access the network may preferentially send, according to a broadcast message, an access link establishment request to the network element that has accessed the network and sends the broadcast message, so as to increase efficiency of the access link establishment.

Referring to FIG. 12, FIG. 12 is a schematic structural diagram of a first possible implementation manner of a network management element according to the present application. A network management element 1200 in this implementation manner includes a receiving module 1210, a generating module 1220, and a sending module 1230.

The receiving module 1210 is configured to receive an access data request forwarded by a network element that has accessed a network, and send the access data request to the generating module 1220.

The generating module 1220 is configured to receive the access data request, generate an access data response by performing authentication according to the access data request, and send the access data response to the sending module 1230. The access data response carries a result indicating whether a network element attempting to access the network is allowed to access the network. The access data response includes access data, and the network element attempting to access the network accesses the network according to the access data.

The sending module 1230 receives the access data response and sends the access data response to the network element that has accessed the network, so that the network element that has accessed the network forwards the access data response to the network element attempting to access the network, so as to allow or forbid the network element attempting to access the network to access the network. For example, after generating the access data response, the network management element 1200 sends the access data response to the network element that has accessed the network. After receiving the access data response, the network element that has accessed the network forwards the access data response to the network element attempting to access the network, and the network element attempting to access the network determines, according to the access data response, whether to access the network.

In the foregoing solution, access authentication can be performed by using a network element that has accessed a network and has relatively high security performance, so as to prevent an attack and improve security performance. In addition, automatic access is implemented by using a link between the network element that has accessed the network and a network management element, which decreases requirements for a person skilled in the art, reduces costs, and prevents errors.

Referring to FIG. 13, FIG. 13 is a schematic structural diagram of a second possible implementation manner of the network management element according to the present application. From a perspective of a structure, different from the the network management element in the foregoing implementation manner, a network management element 1300 in this implementation manner further includes: an encapsulating module 1340, where the encapsulating module 1340 is separately coupled with a generating module 1220 and a sending module 1230.

From a perspective of a function, a difference of the network management element 1300 in this implementation manner lies in that:
a receiving module 1210 is further configured to receive an access link establishment request sent by a network element that has accessed a network, and send the access link establishment request to the generating module 1220. Access link establishment refers to that a network element attempting to access the network establishes a data transmission relationship with the network element that has accessed the network. For example, after receiving the access link establishment request, the network element that has accessed the network sends the access link establishment request to the network management element 1300, and the receiving module 1210 correspondingly receives the access link establishment request sent by the network element that has accessed the network.

The generating module 1220 is further configured to receive the access link establishment request, generate an access link establishment response according to the access link establishment request, and send the access link establishment response to the sending module 1230. For example, after the generating module 1220 receives the access link establishment request, the generating module 1220 performs authentication according to the access link establishment request and generates the access link establishment response.

The encapsulating module 1340 is configured to add access data in an access link establishment response, and send the access link establishment response to the sending module 1230.

The sending module 1230 is further configured to receive the access link establishment response, and send the access link establishment response to the network element that has accessed the network, so as to allow or forbid the network element attempting to access the network to perform access link establishment with the network element that has accessed the network. For example, after the generating module 1220 generates the access link establishment response and the encapsulating module 1340 encapsulates the access data into the access link establishment response, the sending module 1230 sends the access link establishment response to the network element that has accessed the network, so as to allow or forbid the network element attempting to access the network to perform the access link establishment with an access network element.

The sending module 1230 is further configured to send, when the network element attempting to access the network needs to perform the access link establishment with the network element that has accessed the network, configuration information indicating that a link function is enabled to the network element that has accessed the network, and send, after the network element attempting to access the network receives the access link establishment response, configuration information indicating that the link function is disabled to the network element that has accessed the network.

To ensure security, after the network element attempting to access the network receives the access link establishment response, the configuration information indicating that the link function is disabled is sent to the network element that has accessed the network, so as to prevent access of an invalid user. For example, when network elements attempting to access the network concurrently access the network at a specific moment, if it is estimated that access requires about one hour, the network management element 1300 may send, after the link switch configuration information is enabled for one hour, the configuration information indicating that the link function is disabled to the network element that has accessed the network; or when each network element attempting to access the network separately accesses the network, a message is sent manually to the network management element 1300, and the network management element 1300 sends, after receiving the message, the configuration information indicating that the link function is disabled to the network element that has accessed the network.

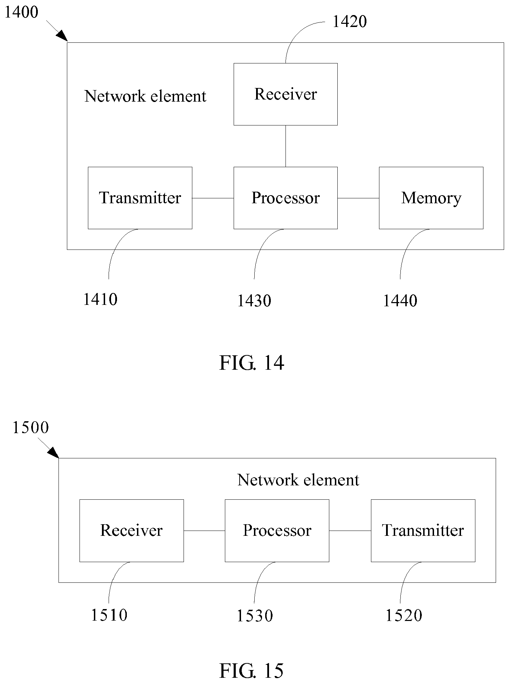

Referring to FIG. 14, FIG. 14 is a schematic structural diagram of a fifth possible implementation manner of the network element according to the present application. A network element 1400 attempts to access a network and the network element 1400 in this implementation manner includes a transmitter 1410, a receiver 1420, a processor 1430, and a memory 1440. The processor 1430 is separately coupled with the transmitter 1410, the receiver 1420, and the memory 1440.

The transmitter 1410 is configured to send an access link establishment request to a network element that has accessed the network, and send an access data request to the network element that has accessed the network, so that the network element that has accessed the network forwards the access data request to a network management element.

The receiver 1420 is configured to receive an access link establishment response sent by the network element that has accessed the network, and an access data response sent by the network element that has accessed the network. The access data response is generated by the network management element by performing authentication after the network management element receives the access data request forwarded by the network element that has accessed the network, and the access data response is sent, to the network element 1400 attempting to access the network, by the network management element via the network element that has accessed the network. The receiver 1420 sends the access data response to the processor 1430.

The processor 1430 is configured to: determine, according to the access link establishment response, whether it is allowed to perform access link establishment with the network element that has accessed the network, so as to obtain a second determining result; when the second determining result is that it is allowed to perform the access link establishment with the network element that has accessed the network, perform, by using the transmitter 1410, the access link establishment with the network element that has accessed the network; determine, according to the access data response, whether the network element 1400 is allowed to access the network, so as to obtain a first determining result; and when the first determining result is that the network element 1400 is allowed to access the network, read access data from the access data response and establish a link with the network by using the transmitter 1410. Specifically, the access data includes an IP address of the network management element and an authentication certificate. After obtaining the IP address of a gateway and the authentication certificate, the network element 1400 attempting to access the network establishes a link with the gateway according to the IP address of the gateway. After establishing the link, the network element 1400 attempting to access the network sends the authentication certificate to the gateway. After receiving the authentication certificate, the gateway performs authentication on the authentication certificate; when authentication is successful, the network element 1400 attempting to access the network is allowed to access the gateway and then accesses the network.

The receiver 1420 is further configured to receive a broadcast message that indicates support of a link function and that is sent by the network element that has accessed the network; the processor 1430 is further configured to raise, according to the broadcast message, a priority level, of the network element that has accessed the network and sends the broadcast message, in the memory 1440; the memory 1440 is configured to store the priority level of the network element that has accessed the network and that can establish a link relationship with the network element 1400.

Referring to FIG. 15, FIG. 15 is a schematic structural diagram of a sixth possible implementation manner of the network element according to the present application. A network element 1500 has accessed a network, and the network element 1500 in this implementation manner includes a receiver 1510, a transmitter 1520, and a processor 1530. The processor 1530 is separately coupled with the receiver 1510 and the transmitter 1520.

The receiver 1510 is configured to receive data sent by a network element attempting to access a network or a network management element.

The transmitter 1520 is configured to send data to the network element attempting to access the network or the network management element, and the transmitter 1520 is further configured to send, when the network element 1500 supports a wireless link function, a broadcast message indicating support of a link function to the network element attempting to access the network.

The processor 1530 is configured to: control the receiver 1510 to receive an access link establishment request sent by the network element attempting to access the network; control the transmitter 1520 to send the access link establishment request to the network management element; control the receiver 1510 to receive an access link establishment response sent by the network management element, where the access link establishment response is generated by the network management element according to the access link establishment request and includes access data; and control the transmitter 1520 to send the access link establishment response to the network element attempting to access the network, so as to allow or forbid the network element attempting to access the network to perform access link establishment with the network element 1500. In addition, the processor 1530 is configured to: control the receiver 1510 to receive an access data request sent by the network element attempting to access the network; control the transmitter 1520 to send the access data request to the network management element; control the receiver 1510 to receive an access data response sent by the network management element, where the access data response is generated by the network management element by performing authentication according to the access data request; and control the transmitter 1520 to send the access data response to the network element attempting to access the network, so as to allow or forbid the network element attempting to access the network to access the network.

Further, the receiver 1510 is further configured to receive link switch configuration information sent by the network management element, and receive the access link establishment request sent by the network element attempting to access the network. The processor 1530 is further configured to: determine, according to the link switch configuration information, whether it is allowed to perform the access link establishment with the network element 1500, so as to obtain a first determining result; and if the first determining result is that it is allowed to perform the access link establishment with the network element 1500, allow the network element attempting to access the network to perform the access link establishment with the network element 1500 according to the access link establishment request; or if the first determining result is that it is not allowed to perform the access link establishment with the network element 1500, forbid the network element attempting to access the network to perform the access link establishment with the network element 1500.

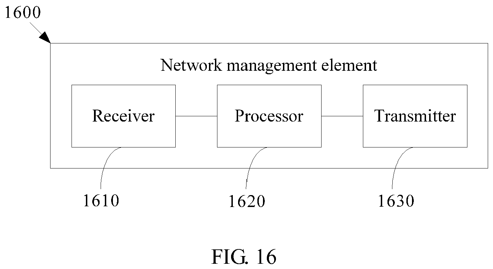

Referring to FIG. 16, FIG. 16 is a schematic structural diagram of a third possible implementation manner of the network management element according to the present application. A network management element 1600 in this implementation manner includes a receiver 1610, a processor 1620, and a transmitter 1630. The processor 1620 is separately coupled with the receiver 1610 and the transmitter 1630.

The receiver 1610 is configured to receive an access link establishment request and an access data request that are sent by a network element that has accessed a network.

The processor 1620 is configured to generate an access link establishment response according to the access link establishment request, and generate an access data response by performing authentication according to the access data request, and the processor 1620 is further configured to add access data in the access data response, so that a network element attempting to access the network accesses the network according to the access data.

The transmitter 1630 is configured to send the access link establishment response to the network element that has accessed the network, so as to allow or forbid the network element attempting to access the network to perform access link establishment with the network element that has accessed the network, and send the access data response to the network element that has accessed the network, so that the network element that has accessed the network forwards the access data response to the network element attempting to access the network, so as to allow or forbid the network element attempting to access the network to access the network.

The transmitter 1630 is further configured to send, when the network element attempting to access the network needs to perform the access link establishment with the network element that has accessed the network, configuration information indicating that a link function is enabled to the network element that has accessed the network, and send, after the network element attempting to access the network receives the access data response, configuration information indicating that the link function is disabled to the network element that has accessed the network.

Based on the foregoing network elements and network management element, the present application further provides a network system, including at least one network element attempting to access a network, one network element that has accessed the network, and one network management element, where the network element attempting to access the network is coupled with the network element that has accessed the network, and the network element that has accessed the network is coupled with the network management element. For a specific structure of the network system, reference may be made to FIG. 1 and related descriptions.

In the several implementation manners provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the implementation manners.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A network element access method, comprising the following steps:
receiving (401), by a network element that has accessed a network, an access data request sent by a network element attempting to access the network, wherein the network element that has accessed a network has valid link data and has the capability of performing data transmission with the network by using a network resource; the access data request is used by the network element attempting to access the network to request to access the network;
sending (402) the access data request to a network management element;
receiving (403) an access data response sent by the network management element, wherein the access data response is generated by the network management element by performing authentication according to the access data request; and
sending (404) the access data response to the network element attempting to access the network, the access data response indicates whether the network element attempting to access the network is allowed to access the network or not; and
wherein before the step of the receiving an access data request sent by a network element attempting to access the network, the method further comprises:
receiving link switch configuration information sent by the network management element;
receiving (502) an access link establishment request sent by the network element attempting to access the network; and
if the link switch configuration information is "enabled", allowing the network element attempting to access the network to perform access link establishment with the network element that has accessed the network according to the access link establishment request; and if the link switch configuration information is "disabled", forbidding the network element attempting to access the network to perform access link establishment with the network element that has accessed the network.

2. The method according to claim 1, wherein the step of the receiving an access data response sent by the network management element comprises:
receiving an access data response that comprises access data and that is sent by the network management element.

3. A network element, wherein the network element has valid link data and has the capability of performing data transmission with the network by using a network resource and comprises a first receiving module (1010), a first sending module (1020), a second receiving module (1030), and a second sending module (1040), wherein
the first receiving module (1010) is configured to receive an access data request sent by a network element attempting to access the network and send the access data request to the first sending module, wherein the access data request is used by the network element attempting to access the network to request to access the network;
the first sending module (1020) is configured to receive the access data request and send the access data request to a network management element;
the second receiving module (1030) is configured to receive an access data response sent by the network management element and send the access data response to the second sending module, wherein the access data response is generated by the network management element by performing authentication according to the access data request; and
the second sending module (1040) is configured to receive the access data response and send the access data response to the network element attempting to access the network, the access data response indicates whether the network element attempting to access the network is allowed to access the network or not.; and
wherein the network element further comprises a switch module (1150), wherein
the second receiving module is further configured to receive link switch configuration information sent by the network management element and send the link switch configuration information to the switch module;
the first receiving module is further configured to receive an access link establishment request sent by the network element attempting to access the network and send the access link establishment request to the switch module; and
the switch module is configured to receive the link switch configuration information and the access link establishment request, wherein when the link switch configuration information is "enabled", the link switch configuration information indicating that the network element attempting to access the network is allowed to perform access link establishment with the network element that has accessed the network according to the access link establishment request, and when the link switch configuration information is "disabled", the link switch configuration information indicating that the network element attempting to access the network is forbidden to perform access link establishment with the network element that has accessed the network.

4. The network element according to claim 3, wherein the second receiving module is further configured to receive an access data response that comprises access data and that is sent by the network management element.

## Patentansprüche

1. Netzwerkelement-Zugriffsverfahren, das die folgenden Schritte umfasst:
Empfangen (401) einer Zugriffsdatenanforderung, die von einem Netzwerkelement gesendet wird, das auf das Netzwerk zuzugreifen versucht, durch ein Netzwerkelement, das auf ein Netzwerk zugegriffen hat, wobei das Netzwerkelement, das auf ein Netzwerk zugegriffen hat, über gültige Linkdaten verfügt und geeignet ist zum Durchführen einer Datenübertragung mit dem Netzwerk, indem eine Netzwerkressource verwendet wird; wobei die Zugriffsdatenanforderung von dem Netzwerkelement verwendet wird, das auf das Netzwerk zuzugreifen versucht, um ein Zugreifen auf das Netzwerk anzufordern;
Senden (402) der Zugriffsdatenanforderung an ein Netzwerkmanagementelement;
Empfangen (403) einer Zugriffsdatenantwort, die von dem Netzwerkmanagementelement gesendet wird, wobei die Zugriffsdatenantwort durch das Netzwerkmanagementelement erzeugt wird, indem eine Authentifizierung gemäß der Zugriffsdatenanforderung durchgeführt wird; und
Senden (404) der Zugriffsdatenantwort an das Netzwerkelement, das auf das Netzwerk zuzugreifen versucht, wobei die Zugriffsdatenantwort angibt, ob dem Netzwerkelement, das auf das Netzwerk zuzugreifen versucht, erlaubt wird, auf das Netzwerk zuzugreifen oder nicht; und
wobei vor dem Schritt des Empfangens einer Zugriffsdatenanforderung, die von einem Netzwerkelement gesendet wird, das auf das Netzwerk zuzugreifen versucht, das Verfahren darüber hinaus umfasst:
Empfangen einer Link-Switch-Konfigurationsinformation, die von dem Netzwerkmanagementelement gesendet wird;
Empfangen (502) einer Zugriffslink-Aufbauanforderung, die von dem Netzwerkelement gesendet wird, das auf das Netzwerk zuzugreifen versucht; und
wenn die Link-Switch-Konfigurationsinformation "aktiviert" lautet, Erlauben, dass das Netzwerkelement versucht, auf das Netzwerk zuzugreifen, um den Aufbau eines Zugriffslinks mit dem Netzwerkelement durchzuführen, das auf das Netzwerk gemäß der Zugriffslink-Aufbauanforderung zugegriffen hat; und wenn die Link-Switch-Konfigurationsinformation "deaktiviert" lautet, Verbieten, dass das Netzwerkelement versucht, auf das Netzwerk zuzugreifen, um den Aufbau eines Zugriffslinks mit dem Netzwerkelement durchzuführen, das auf das Netzwerk zugegriffen hat.

2. Verfahren nach Anspruch 1, wobei der Schritt des Empfangens einer durch das Netzwerkmanagementelement gesendeten Zugriffsdatenantwort Folgendes umfasst:
Empfangen einer Zugriffsdatenantwort, die Zugriffsdaten umfasst und die von dem Netzwerkmanagementelement gesendet wird.

3. Netzwerkelement, wobei das Netzwerkelement über gültige Linkdaten verfügt und geeignet ist zum Durchführen einer Datenübertragung mit dem Netzwerk, indem eine Netzwerkressource verwendet wird, und das ein erstes Empfangsmodul (1010), ein erstes Sendemodul (1020), ein zweites Empfangsmodul (1030) und ein zweites Sendemodul (1040), umfasst, wobei
das erste Empfangsmodul (1010) konfiguriert ist zum Empfangen einer Zugriffsdatenanforderung, die von einem Netzwerkelement gesendet wird, das auf das Netzwerk zuzugreifen versucht, und Senden der Zugriffsdatenanforderung an das erste Sendemodul, wobei die Zugriffsdatenanforderung von dem Netzwerkelement verwendet wird, das auf das Netzwerk zuzugreifen versucht, um ein Zugreifen auf das Netzwerk anzufordern;
das erste Sendemodul (1020) konfiguriert ist zum Empfangen der Zugriffsdatenanforderung und Senden der Zugriffsdatenanforderung an ein Netzwerkmanagementelement;
das zweite Empfangsmodul (1030) konfiguriert ist zum Empfangen einer Zugriffsdatenantwort, die von einem Netzwerkmanagementelement gesendet wird, und Senden der Zugriffsdatenantwort an das zweite Sendemodul, wobei die Zugriffsdatenantwort durch das Netzwerkmanagementelement erzeugt wird, indem eine Authentifizierung gemäß der Zugriffsdatenanforderung durchgeführt wird; und
das zweite Sendemodul (1040) konfiguriert ist zum Empfangen der Zugriffsdatenantwort und Senden der Zugriffsdatenantwort an das Netzwerkelement, das auf das Netzwerk zuzugreifen versucht, wobei die Zugriffsdatenantwort angibt, ob dem Netzwerkelement, das auf das Netzwerk zuzugreifen versucht, erlaubt wird, auf das Netzwerk zuzugreifen oder nicht; und
das Netzwerkelement darüber hinaus ein Switch-Modul (1150) umfasst, wobei das zweite Empfangsmodul darüber hinaus konfiguriert ist zum Empfangen einer Link-Switch-Konfigurationsinformation, die von dem Netzwerkmanagementelement gesendet wird, und Senden der Link-Switch-Konfigurationsinformation an das Switch-Modul;
das erste Empfangsmodul darüber hinaus konfiguriert ist zum Empfangen einer Zugriffslink-Aufbauanforderung, die von dem Netzwerkelement gesendet wird, das auf das Netzwerk zuzugreifen versucht, und Senden der Zugriffslink-Aufbauanforderung an das Switch-Modul; und
das Switch-Modul konfiguriert ist zum Empfangen der Link-Switch-Konfigurationsinformation und der Zugriffslink-Aufbauanforderung, wobei, wenn die Link-Switch-Konfigurationsinformation "aktiviert" lautet,
die Link-Switch-Konfigurationsinformation angibt, dass dem Netzwerkelement, das versucht, auf das Netzwerk zuzugreifen, erlaubt ist, den Aufbau eines Zugriffslinks mit dem Netzwerkelement durchzuführen, das auf das Netzwerk gemäß der Zugriffslink-Aufbauanforderung zugegriffen hat, und wenn die Link-Switch-Konfigurationsinformation "deaktiviert" lautet,
die Link-Switch-Konfigurationsinformation angibt, dass dem Netzwerkelement, das versucht, auf das Netzwerk zuzugreifen, verboten ist, den Aufbau eines Zugriffslinks mit dem Netzwerkelement durchzuführen, das auf das Netzwerk zugegriffen hat.

4. Netzwerkelement nach Anspruch 3, wobei das zweite Empfangsmodul darüber hinaus konfiguriert ist zum Empfangen einer Zugriffsdatenantwort, die Zugriffsdaten umfasst und die von dem Netzwerkmanagementelement gesendet wird.

## Revendications

1. Procédé d'accès à un élément de réseau, comprenant les étapes suivantes consistant à :
recevoir (401), par un élément de réseau qui a accédé à un réseau, une demande de données d'accès envoyée par un élément de réseau essayant d'accéder au réseau, dans lequel l'élément de réseau qui a accédé à un réseau a des données de liaison valides et a la capacité d'effectuer une transmission de données avec le réseau en utilisant une ressource du réseau ; la demande de données d'accès est utilisée par l'élément de réseau essayant d'accéder au réseau pour demander d'accéder au réseau ;
envoyer (402) la demande de données d'accès à un élément de gestion de réseau ;
recevoir (403) une réponse de données d'accès envoyée par l'élément de gestion de réseau, dans lequel la réponse de données d'accès est générée par l'élément de gestion de réseau en effectuant une authentification conformément à la demande de données d'accès ; et
envoyer (404) la réponse de données d'accès à l'élément de réseau essayant d'accéder au réseau, la réponse de données d'accès indique si l'élément de réseau essayant d'accéder au réseau est autorisé ou non à accéder au réseau ; et
avant l'étape de réception d'une demande de données d'accès envoyée par un élément de réseau essayant d'accéder au réseau, le procédé comprenant en outre les étapes consistant à :
recevoir des informations de configuration de commutateur de liaison envoyées par l'élément de gestion de réseau ;
recevoir (502) une demande d'établissement de liaison d'accès envoyée par l'élément de réseau essayant d'accéder au réseau ; et
si les informations de configuration de commutateur de liaison sont « activées », permettre à l'élément de réseau essayant d'accéder au réseau d'effectuer l'établissement de liaison d'accès avec l'élément de réseau ayant accédé au réseau conformément à la demande d'établissement de liaison d'accès ; et si les informations de configuration de commutateur de liaison sont « désactivées », interdire à l'élément de réseau essayant d'accéder au réseau d'effectuer l'établissement de liaison d'accès avec l'élément de réseau ayant accédé au réseau.

2. Procédé selon la revendication 1, dans lequel l'étape de réception d'une réponse de données d'accès envoyée par l'élément de gestion de réseau comprend l'étape consistant à :
recevoir une réponse de données d'accès qui comprend des données d'accès et qui est envoyée par l'élément de gestion de réseau.

3. Élément de réseau, l'élément de réseau possédant des données de liaison valides et étant capable d'effectuer une transmission de données avec le réseau en utilisant une ressource du réseau et comprenant un premier module de réception (1010), un premier module d'envoi (1020), un second module de réception (1030), et un second module d'envoi (1040), dans lequel
le premier module de réception (1010) est configuré pour recevoir une demande de données d'accès envoyée par un élément de réseau essayant d'accéder au réseau et pour envoyer la demande de données d'accès au premier module d'envoi, dans lequel la demande de données d'accès est utilisée par l'élément de réseau essayant d'accéder au réseau pour demander d'accéder au réseau ;
le premier module d'envoi (1020) est configuré pour recevoir la demande de données d'accès et pour envoyer la demande de données d'accès à un élément de gestion de réseau ;
le second module de réception (1030) est configuré pour recevoir une réponse de données d'accès envoyée par l'élément de gestion de réseau et pour envoyer la réponse de données d'accès au second module d'envoi, dans lequel la réponse de données d'accès est générée par l'élément de gestion de réseau en effectuant une authentification conformément à la demande de données d'accès ; et
le second module d'envoi (1040) est configuré pour recevoir la réponse de données d'accès et pour envoyer la réponse de données d'accès à l'élément de réseau essayant d'accéder au réseau, la réponse de données d'accès indique si l'élément de réseau essayant d'accéder au réseau est autorisé ou non à accéder au réseau ; et
l'élément de réseau comprenant en outre un module de commutation (1150), dans lequel
le second module de réception est en outre configuré pour recevoir des informations de configuration de commutateur de liaison envoyées par l'élément de gestion de réseau et pour envoyer les informations de configuration de commutateur de liaison au module de commutation ;
le premier module de réception est en outre configuré pour recevoir une demande d'établissement de liaison d'accès envoyée par l'élément de réseau essayant d'accéder au réseau et pour envoyer la demande d'établissement de liaison d'accès au module de commutation ; et
le module de commutation est configuré pour recevoir les informations de configuration de commutateur de liaison et la demande d'établissement de liaison d'accès,
dans lequel, lorsque les informations de configuration de commutateur de liaison sont « activées », les informations de configuration de commutateur de liaison indiquent que l'élément de réseau essayant d'accéder au réseau est autorisé à effectuer l'établissement de liaison d'accès avec l'élément de réseau ayant accédé au réseau conformément à la demande d'établissement de liaison d'accès, et lorsque les informations de configuration de commutateur de liaison sont « désactivées », les informations de configuration de commutateur de liaison indiquent qu'il est interdit à l'élément de réseau essayant d'accéder au réseau d'effectuer l'établissement de liaison d'accès avec l'élément de réseau ayant accédé au réseau.

4. Élément de réseau selon la revendication 3, dans lequel
le second module de réception est en outre configuré pour recevoir une réponse de données d'accès qui comprend des données d'accès et qui est envoyée par l'élément de gestion de réseau.
